# EUROPEAN PATENT APPLICATION

(11) **EP 4 329 407 A1**
(43) Date of publication of application: **28.02.2024**
(21) Application number: 22806595.9
(22) Date of filing: 06.05.2022
(51) Int. Cl.: H04W 72/04, H04W 74/00, H04W 74/08, H04L 5/00, H04B 1/713

(54) **INFORMATION TRANSMISSION METHOD AND APPARATUS**

(30) Priority: 10.05.2021 CN 202110506698
(71) Applicant: Huawei Technologies Co., Ltd., Longgang Shenzhen, Guangdong 518129 (CN)
(72) Inventor: WEN, Ronghui, Shenzhen, Guangdong 518129 (CN); YU, Zheng, Shenzhen, Guangdong 518129 (CN)
(74) Representative: Epping - Hermann - Fischer
(86) International application number: PCT/CN2022/091073
(87) International publication number: WO 2022/237629

(57) **Abstract**

This application provides an information transmission method and an apparatus. The information transmission method includes: receiving first downlink control information, where the first downlink control information includes frequency hopping indication information of a physical uplink control channel PUCCH and/or transmission mode indication information of the PUCCH, or the first downlink control information is downlink control information scrambled by a first radio network temporary identifier, and includes frequency hopping indication information of a PUCCH, transmission mode indication information of the PUCCH, bandwidth part BWP indication information, and/or repetition indication information; and performing data transmission based on the downlink control information. In this case, with the foregoing information included in the first downlink control information, the terminal device may perform frequency hopping to obtain a frequency diversity gain and improve flexibility, and/or transmission may be repeated to improve transmission performance, and/or a frequency resource may be adjusted to achieve load balancing or obtain a frequency diversity gain.

## Description

This application claims priority to Chinese Patent Application No. 202110506698.4, filed with the China National Intellectual Property Administration on May 10, 2021 and entitled "INFORMATION TRANSMISSION METHOD AND APPARATUS", which is incorporated herein by reference in its entirety.

### TECHNICAL FIELD

This application relates to the communications field, and more specifically, to an information transmission method and an apparatus.

### BACKGROUND

Currently, because a bandwidth that can be supported by a reduced-capability terminal device (reduced-capability user equipment, RedCap UE) is relatively narrow, if a plurality of reduced-capability terminal devices perform information transmission in a same bandwidth, service congestion is caused. In addition, a data processing speed of the reduced-capability terminal device may be relatively slow, so that a base station needs to consider a sufficient delay during scheduling, to ensure that the reduced-capability terminal device can complete data processing.

In a random access process, RedCap UE and non-RedCap UE may select a same random access resource, and in the random access process, a contention-based access problem cannot be resolved until Msg4. Therefore, in the random access process (from Msg1 to Msg4), both the RedCap UE and the non-RedCap UE need to receive same information from the base station. For backward compatibility of the non-RedCap UE, lengths and formats of downlink control information formats (Downlink control information formats, DCI formats) 0_0 and 1_0 received in the random process cannot be changed. However, performance of the RedCap UE needs to be enhanced in the random access process, to improve transmission performance of the RedCap UE. In view of this, an information transmission method and an apparatus are required, to improve transmission performance of a reduced-capability terminal device, thereby resolving the foregoing problem.

### SUMMARY

This application provides an information transmission method, to improve transmission performance of a terminal device.

According to a first aspect, this application provides an information transmission method. The method may be performed by a terminal device, or may be performed by a chip applied to a terminal device. The following provides descriptions by using an example in which the method is performed by a terminal device.

The terminal device receives first downlink control information from a network device. The first downlink control information includes frequency hopping indication information of a physical uplink control channel (Physical uplink control channel, PUCCH) and/or transmission mode indication information of the PUCCH. The terminal device performs data transmission based on the first downlink control information.

It should be understood that the data may be control information, downlink control information, uplink control information, downlink data information, uplink data information, information for random access, paging information, or broadcast information.

In a current technology, frequency hopping is performed on feedback information (a PUCCH) of Msg4 by default, to obtain a frequency diversity gain. However, to avoid a problem of resource fragmentation, frequency-hopping transmission is performed on a PUCCH of legacy UE by default on two sides of a relatively large bandwidth. For example, two transmissions during frequency hopping are respectively performed on two sides of a 100 MHz carrier bandwidth. RedCap UE (the terminal device in this application) supports a narrower bandwidth. Therefore, if two transmissions during frequency hopping still need to be performed on the two sides of the 100 MHz carrier bandwidth, frequency tuning needs to be performed. In addition, during frequency tuning, the RedCap UE cannot perform receiving or sending, causing a resource waste of a tuning symbol. In addition, transmission performance of the RedCap UE may be affected due to a decrease in available resources. Therefore, it is discussed in a current standard that for the RedCap UE, frequency-hopping transmission is not performed on the PUCCH of Msg4 by default. Therefore, based on the foregoing solution, with the frequency hopping indication information of the PUCCH and/or the transmission mode indication information of the PUCCH that are/is included in the first downlink control information, the terminal device may perform frequency hopping based on the first downlink control information, to obtain a frequency diversity gain and improve flexibility.

According to a second aspect, this application provides an information transmission method. The method may be performed by a terminal device, or may be performed by a chip applied to a terminal device. The following provides descriptions by using an example in which the method is performed by a terminal device.

The terminal device receives first downlink control information from a network device. The first downlink control information is downlink control information scrambled by a first radio network temporary identifier (Radio network temporary identity, RNTI), the first downlink control information includes at least one of frequency hopping indication information of a physical uplink control channel PUCCH, transmission mode indication information of the PUCCH, or first information, and the first information includes bandwidth part (Bandwidth part, BWP) indication information and/or repetition indication information. The terminal device performs data transmission based on the downlink control information.

It should be understood that, in the foregoing solution, the first downlink control information including the frequency hopping indication information of the PUCCH and/or the transmission mode indication information of the PUCCH and the first downlink control information including the first information may be scrambled by different first RNTIs. This is not limited in this application.

It should be further understood that the data may be control information, downlink control information, uplink control information, downlink data information, uplink data information, information for random access, paging information, or broadcast information.

Based on the foregoing solution, with at least one of the frequency hopping indication information of the PUCCH, the transmission mode indication information of the PUCCH, the BWP indication information, or the repetition indication information that is included in the first downlink control information, the terminal device may perform frequency hopping to obtain a frequency diversity gain and improve flexibility, and/or transmission may be repeated to improve transmission performance, and/or a frequency resource may be adjusted to achieve load balancing or obtain a frequency diversity gain.

In an example, the BWP indication information indicates at least one of the following: an identifier of at least one BWP, a location of the BWP, a quantity of BWPs, identification information of the BWP, or a BWP switching manner.

In another example, the frequency hopping indication information of the PUCCH may indicate at least one of the following: enabling of frequency hopping of the PUCCH, a frequency hopping offset of the PUCCH, or a frequency hopping manner of the PUCCH.

In another example, the frequency hopping indication information of the PUCCH may indicate disabling of frequency hopping of the PUCCH.

Based on the foregoing solution, the terminal device may perform frequency hopping or disable frequency hopping by using the indication information of the enabling of frequency hopping of the PUCCH, the frequency hopping offset of the PUCCH, frequency hopping of the PUCCH, or the disabling of frequency hopping of the PUCCH, to obtain a frequency diversity gain and improve flexibility.

In another example, a size of the frequency hopping indication information of the PUCCH is 1 bit or 2 bits, and the enabling of frequency hopping of the PUCCH or the disabling of frequency hopping of the PUCCH is indicated by using 1 bit.

In another example, the transmission mode indication information of the PUCCH indicates at least one piece of the following information: a first-type non-frequency-hopping transmission mode of the PUCCH, a second-type non-frequency-hopping transmission mode of the PUCCH, a first-type frequency-hopping transmission mode of the PUCCH, or a second-type frequency-hopping transmission mode of the PUCCH.

In another example, a size of the transmission mode indication information of the PUCCH is 1 bit or 2 bits.

In another example, the first downlink control information is used to schedule a PDSCH or the PUCCH, the first downlink control information does not include second information, and the second information includes at least one of the following: information about a downlink assignment index (Downlink assignment index, DAI), information about a first hybrid automatic repeat request HARQ process number, or a first reserved bit.

Based on the foregoing solution, information about the terminal device may be indicated by using a bit occupied by the second information in the first downlink control information, so that lengths and formats of DCI formats 0_0 and 1_0 received in a random process can remain unchanged, thereby ensuring compatibility of another type of terminal device (for example, legacy UE).

In another example, the first downlink control information is used to schedule a physical downlink shared channel (Physical downlink shared channel, PDSCH) or the PUCCH, and the first downlink control information includes 1-bit information about a downlink assignment index; and/or the first downlink control information includes information about a first hybrid automatic repeat request (Hybrid auto repeat request, HARQ) process number whose size is 1, 2, or 3 bits.

In another example, the downlink control information is used to schedule a contention resolution message of the terminal device; or the downlink control information is used to schedule an acknowledgment feedback message of a contention resolution message of the terminal device.

In another example, the first downlink control information is used to schedule a physical uplink shared channel (Physical uplink shared channel, PUSCH), the first downlink control information does not include third information, and the third information includes at least one of the following: a new data indicator (New data indicator, NDI), a second HARQ process number, or a second reserved bit.

In another example, a size of the new data indicator included in the third information is 1 bit; and/or a size of the second HARQ process number included in the third information is 1, 2, or 3 bits.

Based on the foregoing solution, information about the terminal device is indicated by using the reserved bit or a bit occupied by at least one of the DAI, the HARQ process number, or the NDI in the downlink control information, so that when the terminal device and another type of terminal device (for example, legacy UE) may select a same random access resource, same information from the network device may be received, thereby ensuring backward compatibility, and not affecting receiving of the another type of terminal device. Further, the information about the terminal device is indicated by using a field (a reserved field) in an existing DCI format, so that a payload size (payload size) of the downlink control information sent by the network device to the terminal device can be the same as that of the another type of terminal device.

According to a third aspect, this application provides an information transmission method. The method may be performed by a network device, or may be performed by a chip applied to a network device. The following provides descriptions by using an example in which the method is performed by a network device.

The network device sends first downlink control information to a terminal device. The first downlink control information includes frequency hopping indication information of a physical uplink control channel PUCCH and/or transmission mode indication information of the PUCCH. The network device performs data transmission based on the downlink control information. Based on the foregoing solution, for beneficial effects, refer to the descriptions in the first aspect. Details are not described herein again.

According to a fourth aspect, this application provides an information transmission method. The method may be performed by a network device, or may be performed by a chip applied to a network device. The following provides descriptions by using an example in which the method is performed by a network device.

The network device sends first downlink control information to a terminal device. The first downlink control information is scrambled by a first radio network temporary identifier RNTI, the first downlink control information includes at least one of frequency hopping indication information of a PUCCH, transmission mode indication information of the PUCCH, or first information, and the first information includes BWP indication information of the terminal device and/or repetition indication information of data. The network device performs data transmission based on the downlink control information.

Based on the foregoing solution, for beneficial effects, refer to the descriptions in the second aspect. Details are not described herein again.

In an example, the BWP indication information indicates at least one of the following: an identifier of at least one BWP, a location of the BWP, a quantity of BWPs, identification information of the BWP, or a BWP switching manner.

In another example, the method further includes: determining a first field in the first downlink control information based on a type of the terminal device. The first field is used to indicate at least one of the frequency hopping indication information of the PUCCH, the transmission mode indication information of the PUCCH, or the first information.

In another example, the frequency hopping indication information of the PUCCH indicates at least one of the following: enabling of frequency hopping of the PUCCH, a frequency hopping offset of the PUCCH, or a frequency hopping manner of the PUCCH.

In another example, the frequency hopping indication information of the PUCCH indicates disabling of frequency hopping of the PUCCH.

In another example, a size of the frequency hopping indication information of the PUCCH is 1 bit or 2 bits, and the enabling of frequency hopping of the PUCCH or the disabling of frequency hopping of the PUCCH is indicated by using 1 bit.

In another example, the transmission mode indication information of the PUCCH indicates at least one piece of the following information: a first-type non-frequency-hopping transmission mode of the PUCCH, a second-type non-frequency-hopping transmission mode of the PUCCH, a first-type frequency-hopping transmission mode of the PUCCH, or a second-type frequency-hopping transmission mode of the PUCCH.

In another example, a size of the transmission mode indication information of the PUCCH is 1 bit or 2 bits.

In another example, the first downlink control information is used to schedule a PDSCH or the PUCCH, the first downlink control information does not include second information, and the second information includes at least one of the following: information about a downlink assignment index, information about a first hybrid automatic repeat request HARQ process number, or a first reserved bit.

In another example, the first downlink control information is used to schedule a PDSCH or the PUCCH, and the first downlink control information includes 1-bit information about a downlink assignment index; and/or the first downlink control information includes information about a first HARQ process number whose size is 1, 2, or 3 bits.

In another example, the downlink control information indicates scheduling of a contention resolution message of the terminal device; or the downlink control information indicates scheduling of an acknowledgment feedback message of a contention resolution message of the terminal device.

In another example, the first downlink control information is used to schedule a PUSCH, the first downlink control information does not include third information, and the third information includes at least one of the following: a new data indicator, a second HARQ process number, or a second reserved bit.

In another example, a size of the new data indicator included in the third information is 1 bit; and/or a size of the second HARQ process number included in the third information is 1, 2, or 3 bits.

According to a fifth aspect, a communications apparatus is provided. For beneficial effects, refer to the descriptions in the first aspect. Details are not described herein again. The communications apparatus has a function of implementing behavior in the method example in the first aspect. The function may be implemented by hardware, or may be implemented by hardware executing corresponding software. The hardware or the software includes one or more modules corresponding to the foregoing function. In a possible design, the communications apparatus includes a transceiver module and a processing module. These modules may perform corresponding functions in the method example in the first aspect. For details, refer to the detailed descriptions in the method example. Details are not described herein again.

According to a sixth aspect, a communications apparatus is provided. For beneficial effects, refer to the descriptions in the second aspect. Details are not described herein again. The communications apparatus has a function of implementing behavior in the method example in the second aspect. The function may be implemented by hardware, or may be implemented by hardware executing corresponding software. The hardware or the software includes one or more modules corresponding to the foregoing function. In a possible design, the communications apparatus includes a transceiver module and a processing module. These modules may perform corresponding functions in the method example in the second aspect. For details, refer to the detailed descriptions in the method example. Details are not described herein again.

According to a seventh aspect, a communications apparatus is provided. For beneficial effects, refer to the descriptions in the third aspect. Details are not described herein again. The communications apparatus has a function of implementing behavior in the method example in the third aspect. The function may be implemented by hardware, or may be implemented by hardware executing corresponding software. The hardware or the software includes one or more modules corresponding to the foregoing function. In a possible design, the communications apparatus includes a transceiver module and a processing module. These modules may perform corresponding functions in the method example in the third aspect. For details, refer to the detailed descriptions in the method example. Details are not described herein again.

According to an eighth aspect, a communications apparatus is provided. For beneficial effects, refer to the descriptions in the fourth aspect. Details are not described herein again. The communications apparatus has a function of implementing behavior in the method example in the fourth aspect. The function may be implemented by hardware, or may be implemented by hardware executing corresponding software. The hardware or the software includes one or more modules corresponding to the foregoing function. In a possible design, the communications apparatus includes a transceiver module and a processing module. These modules may perform corresponding functions in the method example in the fourth aspect. For details, refer to the detailed descriptions in the method example. Details are not described herein again.

According to a ninth aspect, a communications apparatus is provided. The communications apparatus may be the terminal device in the foregoing method embodiment, or may be a chip disposed in the terminal device. The communications apparatus includes a communications interface and a processor, and optionally, further includes a memory. The memory is configured to store a computer program or instructions. The processor is coupled to the memory and the communications interface. When the processor executes the computer program or the instructions, the communications apparatus is enabled to perform the method performed by the terminal device in the foregoing method embodiment.

According to a tenth aspect, a communications apparatus is provided. The communications apparatus may be the network device in the foregoing method embodiment, or may be a chip disposed in the network device. The communications apparatus includes a communications interface and a processor, and optionally, further includes a memory. The memory is configured to store a computer program or instructions. The processor is coupled to the memory and the communications interface. When the processor executes the computer program or the instructions, the communications apparatus is enabled to perform the method performed by the network device in the foregoing method embodiment.

According to an eleventh aspect, a computer program product is provided. The computer program product includes computer program code. When the computer program code is run, the method performed by the terminal device in the foregoing aspects is performed.

According to a twelfth aspect, a computer program product is provided. The computer program product includes computer program code. When the computer program code is run, the method performed by the network device in the foregoing aspects is performed.

According to a thirteenth aspect, this application provides a chip system. The chip system includes a processor, configured to implement functions of the terminal device in the method in the foregoing aspects. In a possible design, the chip system further includes a memory, configured to store program instructions and/or data. The chip system may include a chip, or may include a chip and another discrete component.

According to a fourteenth aspect, this application provides a chip system. The chip system includes a processor, configured to implement functions of the network device in the method in the foregoing aspects. In a possible design, the chip system further includes a memory, configured to store program instructions and/or data. The chip system may include a chip, or may include a chip and another discrete component.

According to a fifteenth aspect, this application provides a computer-readable storage medium. The computer-readable storage medium stores a computer program. When the computer program is run, the method performed by the terminal device in the foregoing aspects is implemented. According to a sixteenth aspect, this application provides a computer-readable storage medium. The computer-readable storage medium stores a computer program. When the computer program is run, the method performed by the network device in the foregoing aspects is implemented.

### BRIEF DESCRIPTION OF DRAWINGS

FIG. 1 is a schematic diagram of a communications system 10 applicable to an embodiment of this application;
   (a) in FIG. 2 shows a communications network architecture in the communications system 10 according to this application;

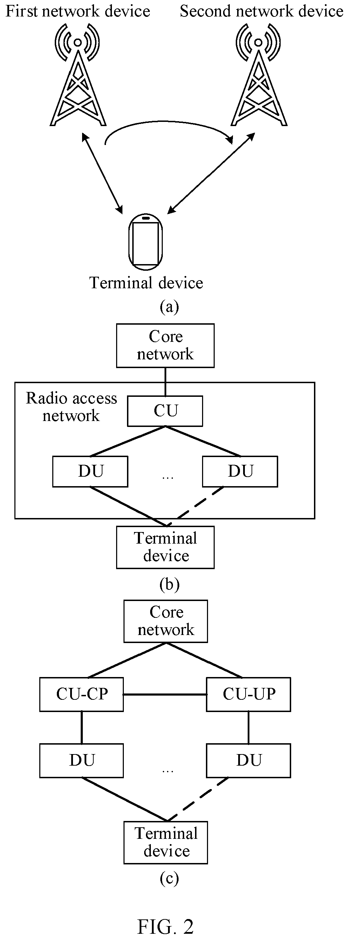

   (b) in FIG. 2 shows another communications network architecture in the communications system 10 according to this application;
   (c) in FIG. 2 shows another communications network architecture in the communications system 10 according to this application;

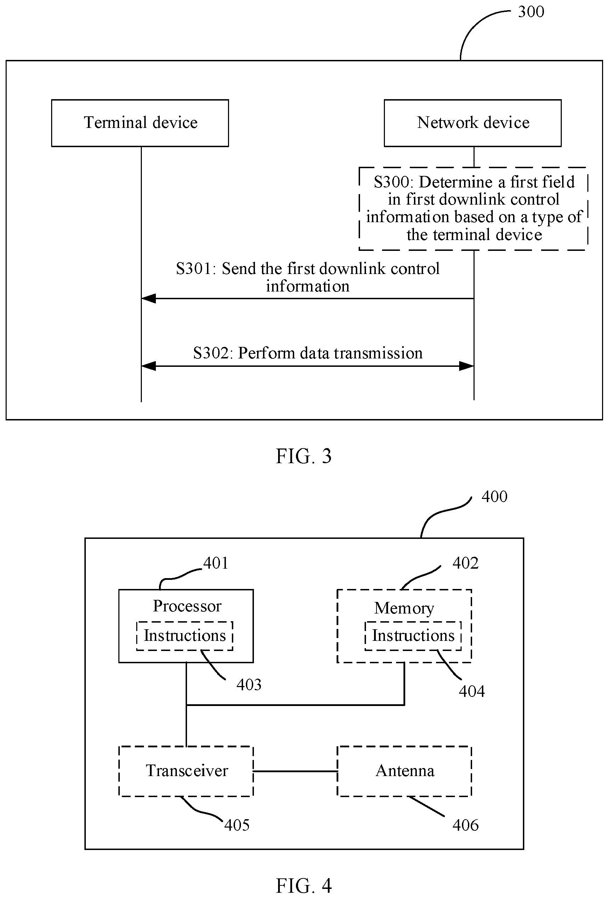

FIG. 3 is a schematic diagram of an information transmission method 300 according to an embodiment of this application;
FIG. 4 is a schematic diagram of a structure of a communications apparatus according to an embodiment of this application;

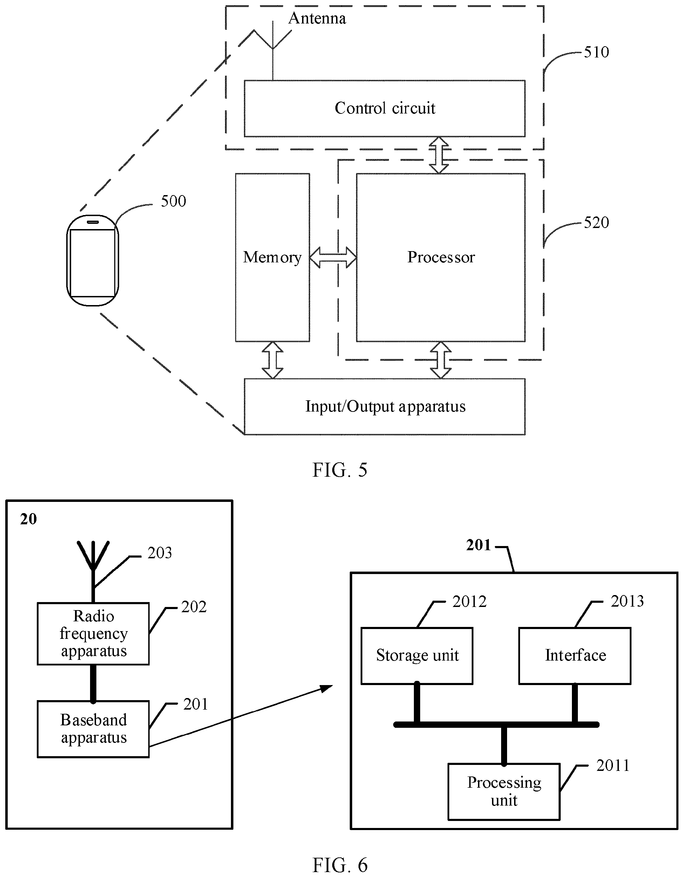

FIG. 5 is a schematic diagram of a structure of a terminal device according to an embodiment of this application; and
FIG. 6 is a schematic diagram of a structure of a network device according to an embodiment of this application.

### DESCRIPTION OF EMBODIMENTS

The following describes technical solutions of this application with reference to accompanying drawings.

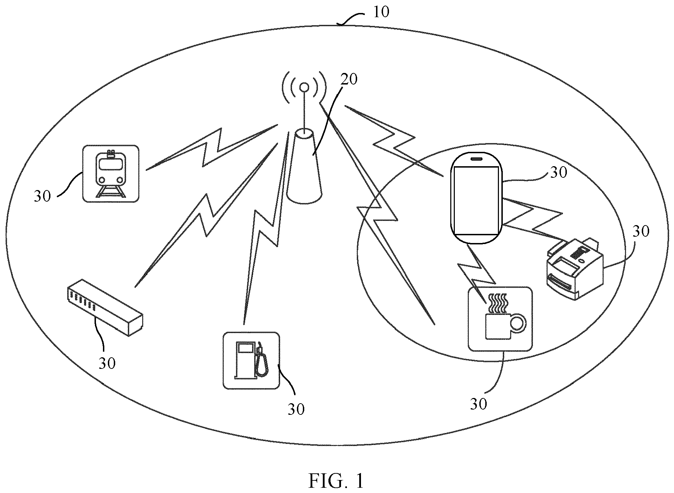

A technology provided in embodiments of this application may be applied to a communications system 10 shown in FIG. 1. The communications system 10 includes one or more communications apparatuses 30 (for example, terminal devices) connected to one or more core network devices via one or more access network devices 20, to implement communication between a plurality of communications devices. The communications system may be, for example, a communications system that supports a 2G, 3G, 4G, or 5G (sometimes also referred to as new radio, NR) access technology, a wireless fidelity (wireless fidelity, Wi-Fi) system, or a 3rd generation partnership project (3rd generation partnership project, 3GPP) related cellular system, a communications system that supports convergence of a plurality of wireless technologies, or a future-oriented evolved system.

The following explains some terms in embodiments of this application, to facilitate understanding of a person skilled in the art.

In this application, the terminal device is a device with a wireless transceiver function, and may be a fixed device, a mobile device, a handheld device (for example, a mobile phone), a wearable device, an in-vehicle device, or a wireless apparatus (for example, a communications module, a modem, or a chip system) built in the foregoing device. The terminal device is configured to connect persons, objects, machines, and the like, and may be widely used in various scenarios, including, for example but not limited to terminal devices the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an unmanned aerial vehicle, and a robot. The terminal device sometimes may be referred to as user equipment (user equipment, UE), a terminal, an access station, a UE station, a remote station, a wireless communications device, a user apparatus, or the like. For ease of description, the UE is used as an example for description of the terminal device in this application. A network device in this application includes, for example, an access network device and/or a core network device. The access network device is a device with a wireless transceiver function, and is configured to communicate with the terminal device. The access network device includes but is not limited to a base station (BTS, NodeB, eNodeB/eNB, or gNodeB/gNB) in the communications system, a transmission reception point (transmission reception point, TRP), a base station that is subsequently evolved from 3GPP, and an access node, a wireless relay node, a wireless backhaul node, and the like in the Wi-Fi system. The base station may be a macro base station, a micro base station, a pico base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (centralized unit, CU), and/or a distributed unit (distributed unit, DU) in a cloud radio access network (cloud radio access network, CRAN) scenario. The network device may alternatively be a server, a wearable device, an in-vehicle device, or the like. For example, a network device in a V2X technology may be a road side unit (road side unit, RSU). The following uses an example in which the access network device is a base station for description. A plurality of network devices in the communications system may be base stations of a same type, or may be base stations of different types. The base station may communicate with the terminal device, or may communicate with the terminal device through a relay station. The terminal device may communicate with a plurality of base stations in different access technologies. The core network device is configured to implement a mobility management function, a data processing function, a session management function, a policy and charging function, and the like. Names of devices that implement core network functions in systems of different access technologies may be different. This is not limited in this application. A 5G system is used as an example. The core network device includes an access and mobility management function (access and mobility management function, AMF), a session management function (session management function, SMF), a user plane function (user plane function, UPF), or the like.

In embodiments of this application, a communications apparatus for implementing a network device function may be a network device, or may be an apparatus that can support a network device in implementing the function, for example, a chip system. The apparatus may be installed in the network device. In technical solutions provided in embodiments of this application, the technical solutions provided in embodiments of this application are described by using an example in which the apparatus for implementing a network device function is a network device.

Different UEs have different radio frequency capabilities, and therefore can support different maximum bandwidths. Therefore, a concept of a bandwidth part (bandwidth part, BWP) is introduced, that is, a part of a spectrum is allocated to UE on a bandwidth, to adapt to a bandwidth that can be supported by the UE. Therefore, in the communications system, a bandwidth of the UE is dynamically changeable. The technology sometimes may also be referred to as bandwidth adaptation (bandwidth adaptation). BWPs of a plurality of different bandwidths are configured for the UE, thereby implementing flexible scheduling for the UE and energy saving for the UE.

To reduce a transmission loss in a communications process, a beamforming technology may be used. For example, in both a downlink and an uplink, beams are used for sending. In a 5G system, there are a series of beam training processes, so that uplink and downlink beams can be aligned. For example, in the 5G system, there is a random access channel (random access channel, RACH) process based on an SSB. The process is a beam training process in an access process. With the process, a downlink transmit beam of a base station can be aligned with an uplink receive beam of UE, and an uplink transmit beam of the UE can be aligned with a downlink receive beam of the base station. In the 5G system, there is also a downlink beam training process based on an SSB or a channel state information-reference signal (channel state information-reference signal, CSI-RS). The process may occur after access succeeds. With the process, a downlink transmit beam of a base station can be aligned with an uplink receive beam of UE. In addition, there is also an uplink beam training process based on a sounding reference signal (sounding reference signal, SRS) in the 5G system. The process may also occur after access succeeds. With the process, a downlink receive beam of a base station may be aligned with an uplink transmit beam of UE.

In this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between associated objects. For example, A/B indicates A or B. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Ordinal numbers such as "first" and "second" mentioned in embodiments of this application are intended to distinguish between a plurality of objects, but not to limit sizes, content, an order, a time sequence, priorities, or importance of the plurality of objects. For example, configuration information of a first downlink RS and configuration information of a second downlink RS may be same configuration information, or may be different configuration information. In addition, such names do not indicate that the two pieces of configuration information differ in information sizes, content, priorities, importance, or the like.
(a) in FIG. 2 shows a communications network architecture in the communications system 10 according to this application. All subsequently provided embodiments shown in FIG. 3 are applicable to the architecture. A first network device is a source network device (or referred to as an active network device or a serving network device) of a terminal device (UE is used as an example for description subsequently), and a second network device is a target network device (or referred to as a standby network device) of the UE, that is, a network device that provides a service for the UE after switching. It should be noted that, in this application, a "fault" may be understood as that a network device is faulty, and/or cannot provide a service for one or more UEs due to another reason, which is referred to as a fault for short. The "switching" in this application refers to switching of a network device that provides a service for the UE, and is not limited to "cell handover". For ease of description, an example in which the network device is a base station is used for description. The "switching" may refer to switching caused by a change of a base station that provides a service for the UE. For example, when a source base station of the UE is faulty, a standby base station provides a service for the UE. For another example, when the UE switches from a source base station to another base station for communication, a switched-to target base station provides a service for the UE. Cells that the UE accesses before and after the switching may be the same, or may be different. It may be understood that the standby network device is a relative concept. For example, for one UE, a base station 2 is a standby network device of a base station 1, and for another UE, the base station 1 is a standby network device of the base station 2. The first network device and the second network device may be two different devices. For example, the first network device and the second network device are two different base stations. Optionally, the first network device and the second network device may alternatively be two functional modules in a same device. The functional module may be a hardware module, or a software module, or a hardware module and a software module. For example, the first network device and the second network device are located in a same base station, and are two different functional modules in the base station. In an implementation, the first network device and the second network device are not transparent to the UE. When interacting with a corresponding network device, the UE can learn the network device that the UE is interacting with. In another implementation, the first network device and the second network device are transparent to the UE. The UE can communicate with a network device, but does not learn the UE is interacting with which one of the two network devices. Alternatively, the UE may consider that there is only one network device. In FIG. 3, the first network device and the second network device are located in one dashed-line box, indicating that the first network device and the second network device may not be transparent to the UE, or may be transparent to the UE. In subsequent descriptions, the first network device, the second network device, and the terminal device (UE is used as an example) may be respectively the first network device, the second network device, and the UE in the network architecture shown in (a) in FIG. 2, and steps represented by dashed lines in accompanying drawings corresponding to embodiments of this application are optional steps, which is not repeated below.
(b) in FIG. 2 shows another communications network architecture in the communications system 10 according to this application. As shown in (b) in FIG. 2, the communications system includes a core network (new core, CN) and a radio access network (radio access network, RAN). A network device (for example, a base station) in the RAN includes a baseband apparatus and a radio frequency apparatus. The baseband apparatus may be implemented by one or more nodes, and the radio frequency apparatus may be independently implemented remotely from the baseband apparatus, or may be integrated into the baseband apparatus, or partially implemented remotely and partially integrated into the baseband apparatus. The network device in the RAN may include a central unit (CU) and a distributed unit (DU), and a plurality of DUs may be all controlled by one CU. The CU and the DU may be obtained through division based on protocol layer functions of a wireless network. For example, functions of a PDCP layer and a protocol layer above the PDCP layer are set on the CU, and functions of a protocol layer below the PDCP layer, such as an RLC layer and a MAC layer, are set on the DU. It should be noted that the protocol layer division is merely an example, and there may be other protocol layer division. The radio frequency apparatus may not be disposed in the DU but is disposed remotely, or may be integrated into the DU, or partially disposed remotely and partially integrated into the DU. This is not limited in this application.
(c) in FIG. 2 shows another communications network architecture in the communications system 10 according to this application. Different from the architecture shown in (b) in FIG. 2, a control plane (CP) and a user plane (UP) of the CU may be further separated and implemented by different entities: a control-plane CU entity (CU-CP entity) and a user-plane CU entity (CU-UP entity). In the network architecture, signaling generated by the CU may be sent to the UE through the DU, or signaling generated by the UE may be sent to the CU through the DU. The DU may transparently transmit the signaling to the UE or the CU by directly encapsulating the signaling at a protocol layer without parsing the signaling. In the network architecture, the CU is classified as a network device on a RAN side. In addition, the CU may be classified as a network device on a CN side. This is not limited in this application.

In embodiments of this application, the terminal device is a device with a wireless transceiver function, or a chip that can be disposed in the device. Further, embodiments of this application may be applied to a reduced-capability terminal device in an NR system, which is referred to as a REDCAP terminal device for short below. Embodiments of this application may be further applied to a terminal device in a future updated system, for example, a terminal device in an NR system release 17 (release 17, Rel-17) or a later release or a terminal device in another system.

It should be noted that a difference between a first terminal device and a second terminal device may include at least one of the following:
1. Different bandwidth capabilities: For example, a carrier bandwidth of the first terminal device is not greater than 50 MHz, for example, is at least one of 50 MHz, 40 MHz, 20 MHz, 15 MHz, 10 MHz, or 5 MHz, while a carrier bandwidth of the second terminal device is greater than 50 MHz.
2. Different quantities of transmit and receive antennas: For example, the first terminal device may support 2R1T (two receive antennas and one transmit antenna) or 1R1T (one receive antenna and one transmit antenna). The second terminal device may support 4R2T (four receive antennas and two transmit antennas). It may be understood that, when a same data transmission rate is implemented, because quantities of transmit and receive antennas of the first terminal device are less than quantities of transmit and receive antennas of the second terminal device, a maximum coverage area that can be implemented for data transmission between the first terminal device and a base station is less than a maximum coverage area that can be implemented for data transmission between the second terminal device and the base station.
3. Different maximum uplink transmit powers: For example, a maximum uplink transmit power of the first terminal device may be a value between 4 decibel-milliwatts (dBm) and 20 dBm. A maximum uplink transmit power of the second terminal device may be 23 dBm or 26 dBm.
4. Different protocol releases: The first terminal device may be a terminal device in an NR release 17 (release-17, Rel-17) or a release that comes after NR Rel-17. The second terminal device may be, for example, a terminal device in an NR release 15 (release-15, Rel-15) or an NR release 16 (release-16, Rel-16). The second terminal device may also be referred to as an NR legacy (NR legacy) terminal device.
5. Different carrier aggregation capabilities: For example, the first terminal device does not support carrier aggregation, while the second terminal device may support carrier aggregation. For another example, both the first terminal device and the second terminal device may support carrier aggregation, but a maximum quantity of carriers whose aggregation is supported by the first terminal device is less than a maximum quantity of carriers whose aggregation is supported by the second terminal device. For example, the first terminal device supports aggregation of a maximum of two carriers, while the second terminal device may support aggregation of a maximum of five carriers or 32 carriers.
6. Different duplex capabilities: For example, the first terminal device supports half-duplex frequency division duplex (frequency division duplexing, FDD). The second terminal device supports full-duplex FDD.
7. Different data processing time capabilities: For example, a minimum delay between receiving downlink data and sending a feedback on the downlink data by the first terminal device is greater than a minimum delay between receiving downlink data and sending a feedback on the downlink data by the second terminal device; and/or a minimum delay between sending uplink data and receiving a feedback on the uplink data by the first terminal device is greater than a minimum delay between sending uplink data and receiving a feedback on the uplink data by the second terminal device.
8. Different processing capabilities (ability/capability): For example, a baseband processing capability of the first terminal device is lower than a baseband processing capability of the second terminal device. The baseband processing capability may include at least one of the following: a maximum quantity of MIMO layers supported when the terminal device performs data transmission, a quantity of HARQ processes supported by the terminal device, or a maximum transport block size (transmission block size, TBS) supported by the terminal device.
9. Different uplink and/or downlink peak transmission rates: The peak transmission rate is a maximum data transmission rate that can be reached by the terminal device per unit of time (for example, per second). An uplink peak rate supported by the first terminal device may be lower than an uplink peak rate supported by the second terminal device; and/or a downlink peak rate supported by the first terminal device may be lower than a downlink peak rate supported by the second terminal device. For example, the first terminal device has an uplink peak rate less than or equal to 50 Mbps, and a downlink peak rate less than or equal to 150 Mbps; and the second terminal device has an uplink peak rate greater than or equal to 50 Mbps, and a downlink peak rate greater than or equal to 150 Mbps. For another example, the uplink peak rate or the downlink peak rate of the first terminal device is at a hundred-Mbps level, while the uplink peak rate or the downlink peak rate of the second terminal device is at a Gbps level.
10. Different buffer (buffer) sizes: The buffer (buffer) may be understood as a total layer 2 (Layer 2, L2) buffer size, and is defined as a sum of a quantity of bytes buffered by the terminal device for all radio bearers in a radio link control (radio link control, RLC) transmit window, receive window, and reordering window, and a quantity of bytes buffered in a packet data convergence protocol (Packet Data Convergence Protocol, PDCP) reordering window. Alternatively, the buffer (buffer) may be understood as a total quantity of soft channel bits that can be used for hybrid automatic repeat request (Hybrid Automatic Repeat reQuest, HARQ) processing.

Optionally, in embodiments of this application, the first terminal device may be a REDCAP terminal device in an NR system, or the first terminal device may also be referred to as a low-capability terminal device, a reduced-capability terminal device, REDCAP UE, reduced-capability UE, mMTC UE, or the like. The NR system may further include another terminal device, for example, the second terminal device. The second terminal device may be a legacy-capability, normal-capability, or high-capability terminal device, and may also be referred to as a legacy terminal device or legacy UE. The second terminal device and the first terminal device have the foregoing distinguishing features.

Certainly, the foregoing is merely examples, and there may be another difference between the REDCAP terminal device and the legacy terminal device. Examples are not described one by one herein.

Currently, compared with the second terminal device, because the first terminal device supports a narrower bandwidth, for example, 20 MHz, a range of selectable resources during scheduling by the base station is small, and a frequency domain diversity gain that can be obtained is small. Because the first terminal device has a smaller quantity of antennas, a spatial diversity gain cannot be obtained during signal receiving, coverage enhancement needs to be considered, or a performance loss caused by frequency tuning needs to be considered, and transmission needs to be repeated to improve transmission performance. In addition, because the first terminal device has a slow processing speed, the base station needs to consider a larger delay during scheduling, to ensure that the first terminal device can complete data processing. For example, coverage may be enhanced by repeated transmission of a PUCCH. However, currently, there is no related information indicating repeated transmission of the PUCCH.

In addition, feedback information (a PUCCH) of a message 4 (message 4, Msg4) in a contention-based random access process does not have indication information, and therefore frequency hopping is performed by default to obtain a diversity gain, which, however, causes a problem of resource fragmentation. To avoid the problem of resource fragmentation, frequency-hopping transmission is performed on a PUCCH of the second terminal device by default on two sides of a relatively large bandwidth. For example, two transmissions during frequency hopping are respectively performed on two sides of a 100 MHz carrier bandwidth. However, the first terminal device supports a narrower bandwidth. Therefore, if two transmissions during frequency hopping still need to be performed on the two sides of the 100 MHz carrier bandwidth, frequency tuning needs to be performed. However, during frequency tuning, the first terminal device cannot receive or send a resource, causing a resource waste of a tuning symbol. In addition, transmission performance of the first terminal device is affected due to a decrease in available resources. Therefore, currently, frequency-hopping transmission is not performed on a PUCCH of Msg4 of the first terminal device by default, which, however, leads to disadvantages such as a failure to obtain a frequency diversity gain and a decrease in flexibility. Msg4 is a contention resolution message or downlink control information scrambled by a TC-RNTI.

In addition, because the first terminal device supports a narrower bandwidth, if the base station configures a same bandwidth for a plurality of first terminal devices to transmit information, service congestion may be caused. In addition, because the bandwidth is narrower, a frequency selective gain is smaller. In the foregoing case, the base station needs to perform load balancing or obtain a frequency diversity gain, and adjust a frequency domain resource of the first terminal device, for example, change a location of a BWP, or perform BWP tuning. However, currently, there is no related information indicating a BWP in scheduling information of a PUCCH. Currently, 1 bit occupied by a new data indicator (New data indicator, NDI) in a DCI format 0_0 scrambled by a TC-RNTI is a reserved bit, that is, during scrambling by the TC-RNTI, the field is not used to indicate new data indicator information, or the base station does not use the field to indicate information, or a user does not read the field. In addition, 4 bits occupied by a hybrid automatic repeat request process number (Hybrid auto repeat request process number, HARQ process number) in the DCI format 0_0 scrambled by the TC-RNTI are reserved bits. In addition, 2 bits occupied by a data assignment index (Downlink assignment index, DAI) in a DCI format 1_0 scrambled by a TC-RNTI are reserved bits.

In view of this, this application provides a solution of indicating information about the first terminal device by using a bit (or a reserved bit) in DCI, to improve transmission performance of the first terminal device, without affecting information receiving of the second terminal device.

It should be understood that, in embodiments of this application, the first terminal device is a reduced-capability terminal device in an NR system, and the second terminal device is a nonreduced-capability terminal device or a legacy terminal device.

FIG. 3 is a schematic diagram of an information transmission method 300 according to an embodiment of this application. As shown in FIG. 3, the method 300 includes the following steps. S301: A first terminal device receives first downlink control information sent by a network device. Correspondingly, the network device sends the first downlink control information to the terminal device.

For example, the first terminal device may receive the first downlink control information sent by the network device, and the first downlink control information is used to schedule the terminal device.

In a possible implementation, the first downlink control information may include frequency hopping indication information of a PUCCH and/or transmission mode indication information of the PUCCH.

Specifically, the first terminal device may receive the first downlink control information sent by the network device, to obtain the frequency hopping indication information of the PUCCH and/or the transmission mode indication information of the PUCCH in the first downlink control information. Further, the first downlink control information may be scrambled by a second RNTI. The second RNTI is a TC-RNTI, an RA-RNTI, an SI-RNTI, or a P-RNTI.

For example, the frequency hopping indication information of the PUCCH may indicate at least one of the following: enabling of frequency hopping of the PUCCH, a frequency hopping offset of the PUCCH, or a frequency hopping manner of the PUCCH. Alternatively, the frequency hopping indication information of the PUCCH may indicate disabling of frequency hopping of the PUCCH.

When the frequency hopping indication information of the PUCCH indicates enabling (enable) of frequency hopping of the PUCCH, transmission scheduled by the first downlink control information is frequency-hopping transmission. When the frequency hopping indication information of the PUCCH indicates disabling (disable) of frequency hopping of the PUCCH, transmission scheduled by the first downlink control information is not frequency-hopping transmission, or a frequency domain resource of the transmission scheduled by the first downlink control information remains unchanged. When the frequency hopping indication information of the PUCCH indicates a frequency hopping offset of the PUCCH, frequency hopping is enabled for the PUCCH by default. In addition, when the frequency hopping offset is used for frequency-hopping transmission, the frequency hopping indication information of the PUCCH may indicate a frequency offset between two frequency-hopping transmissions of the PUCCH.

It should be understood that the frequency hopping manner of the PUCCH may be intra-slot frequency hopping, inter-slot frequency hopping, intra-BWP frequency hopping, inter-BWP frequency hopping, intra-carrier frequency hopping, intra-slot and intra-BWP frequency hopping, intra-slot and inter-BWP frequency hopping, inter-slot and intra-BWP frequency hopping, or inter-slot and inter-BWP frequency hopping. For example, the intra-BWP frequency hopping means that a resource for each transmission is in a BWP. Each transmission is any one of a plurality of frequency-hopping transmissions. The inter-BWP frequency hopping means that a resource for at least one transmission is beyond a BWP.

It should be further understood that, the frequency hopping indication information of the PUCCH may indicate at least one of frequency hopping of the PUCCH in a first resource, frequency hopping of the PUCCH beyond the first resource, a frequency hopping offset of the PUCCH in the first resource, a frequency hopping offset of the PUCCH beyond the first resource, a frequency hopping spectrum graph of the PUCCH, requiring frequency tuning between two adjacent frequency hops of the PUCCH, not requiring frequency tuning between two adjacent frequency hops of the PUCCH, an interval between two hops during frequency-hopping transmission of the PUCCH, a quantity of symbols between two adj acent frequency hops of the PUCCH, or a resource during frequency-hopping transmission of the PUCCH. The frequency hopping spectrum graph of the PUCCH is a quantity of slots consecutively transmitted on a same frequency resource, or a quantity of frequency hops during transmission. The first resource may be a BWP, a carrier, a predefined resource, a configured resource, or a maximum bandwidth supported by the first terminal device. The PUCCH is feedback information of Msg4.

For example, the frequency hopping of the PUCCH in the first resource may mean that a resource for each transmission of the PUCCH is in the first resource. The frequency hopping of the PUCCH beyond the first resource may mean that a resource for at least one transmission of the PUCCH is beyond the first resource. Each transmission is any one of a plurality of frequency-hopping transmissions.

For example, the frequency hopping offset of the PUCCH in the first resource may mean that when the offset is applied, a resource for each transmission of the PUCCH is in the first resource. The frequency hopping offset of the PUCCH beyond the first resource may mean that when the offset is applied, a resource for at least one transmission of the PUCCH is beyond the first resource. The frequency hopping offset is a frequency difference between start symbols or end symbols of two transmissions. Each transmission is any one of a plurality of frequency-hopping transmissions. For example, the frequency hopping spectrum graph of the PUCCH may be a quantity of time units consecutively transmitted on a same frequency domain resource, or may be a quantity of frequency hops during transmission. The time unit is a slot, a symbol, or a subslot, and the quantity of frequency hops is a quantity of frequency domain resource changes in frequency-hopping transmission.

For example, the requiring frequency tuning between two adjacent frequency hops of the PUCCH may mean that there is a time interval between two adjacent frequency hops of the PUCCH. The time interval is used for frequency tuning, or is a time of frequency tuning.

For example, the interval between two hops during frequency-hopping transmission of the PUCCH may be a time interval between two frequency-hopping transmissions, or a quantity of symbols between two frequency-hopping transmissions.

The PUCCH may be feedback information of Msg4, and Msg4 may be a contention resolution message or downlink control information scrambled by a TC-RNTI.

It should be understood that a size of the frequency hopping indication information of the PUCCH may be 1 bit or 2 bits. For example, when the size of the frequency hopping indication information of the PUCCH is 1 bit, the 1 bit is used to indicate enabling of frequency hopping of the PUCCH or disabling of frequency hopping of the PUCCH. When the size of the frequency hopping indication information of the PUCCH is 2 bits, the 2 bits are used to indicate a frequency offset value and whether frequency hopping is performed. For example, 00 indicates a frequency offset 1 and frequency hopping, 01 indicates a frequency offset 2 and frequency hopping, 10 indicates a frequency offset 3 and frequency hopping, and 11 indicates no frequency hopping. The frequency offset 1, the frequency offset 2, and the frequency offset 3 are different frequency offset values. For example, the transmission mode indication information of the PUCCH may indicate at least one piece of the following information: a first-type non-frequency-hopping transmission mode of the PUCCH, a second-type non-frequency-hopping transmission mode of the PUCCH, a first-type frequency-hopping transmission mode of the PUCCH, or a second-type frequency-hopping transmission mode of the PUCCH. Further, a size of the transmission mode indication information of the PUCCH may be 1 bit or 2 bits.

For example, in the first-type non-frequency-hopping transmission mode, the PUCCH is sent in a time unit in a non-frequency hopping manner, and uplink control information (Uplink control information, UCI) of the PUCCH includes a first part and a second part. The first part is sent by using an orthogonal sequence whose length is L1. The second part is sent by using an orthogonal sequence whose length is L2. Additionally/alternatively, the PUCCH is sent in a time unit in a non-frequency hopping manner, and a demodulation reference signal (Demodulation reference signal, DMRS) of the PUCCH includes a third part and a fourth part. The third part is transmitted by using an orthogonal sequence whose length is L3. The fourth part is transmitted by using an orthogonal sequence whose length is L4. Li (i=1, 2, 3, or 4) is a positive integer. For example, in an inter-time-unit frequency-hopping transmission mode, the PUCCH is sent at a first frequency hop by using F symbols in an n^{th} time unit, and the PUCCH is sent at a second frequency hop by using L-F symbols in an (n+1)^{th} time unit. A length of the PUCCH is L symbols, there is an interval of 14-F symbols between the last symbol in the F symbols and the first symbol in the L-F symbols, and F and L are positive integers.

For example, in the second-type non-frequency-hopping transmission mode, the PUCCH is sent in a time unit in a non-frequency hopping manner, and UCI of the PUCCH is sent by using an orthogonal sequence whose length is L5. A DMRS of the PUCCH is sent by using an orthogonal sequence whose length is L6. Li (i=5 or 6) is an integer.

For example, in the first-type frequency-hopping transmission mode, a specific quantity of symbols are specified between a first frequency hop and a second frequency hop of the PUCCH, and the specific quantity of symbols may be used for frequency tuning. In this way, even if the first terminal device (a low-complexity terminal device) receives the PUCCH or sends the PUCCH within a frequency range that exceeds a maximum channel bandwidth capability of the first terminal device, frequency tuning may be performed in the specific quantity of symbols, and transmission of the PUCCH is not affected.

For example, in the second-type frequency-hopping transmission mode, there is no interval between a first frequency hop and a second frequency hop.

In an intra-time-unit frequency-hopping transmission mode, the PUCCH is sent in a time unit in a frequency hopping manner.

In an implementation, a format of the first downlink control information may be a DCI format 1_0.

Optionally, when the first downlink control information is used to schedule a PDSCH or the PUCCH, the first downlink control information may not include second information. The second information includes at least one of the following: information about a DAI, information about a first HARQ process number, or a first reserved bit.

For example, in the first downlink control information, there are a total of 2 bits for indicating the frequency hopping indication information of the PUCCH, 1 bit is used to indicate a frequency hopping flag of the PUCCH, and 1 bit is used to indicate a frequency hopping offset of the PUCCH, as shown in Table 1.

**Table 1**

| Quantity of bits | First downlink control information |
|---|---|
| 2 | 1 bit is used to indicate a frequency hopping flag of the PUCCH |
| | 1 bit is used to indicate a frequency hopping offset of the PUCCH |

It should be understood that when the first downlink control information is used to schedule the PDSCH of the first terminal device, the first downlink control information may include frequency hopping information of feedback information, that is, the PUCCH, corresponding to the PDSCH. For example, the frequency hopping information of the PUCCH may include whether frequency-hopping transmission is performed on the PUCCH and information about a frequency offset during frequency hopping.

It should be further understood that the first downlink control information may include 1 bit, to indicate whether frequency-hopping transmission is performed on the PUCCH, or indicate a frequency hopping flag of the PUCCH. For example, when a bit state of the frequency hopping flag of the PUCCH is "0", the frequency hopping flag of the PUCCH indicates enabling of frequency hopping of the PUCCH. For example, when a bit state of the frequency hopping flag of the PUCCH is "1", the frequency hopping flag of the PUCCH indicates disabling of frequency hopping of the PUCCH.

Correspondingly, the network device may send second downlink control information to a second terminal device, and the second downlink control information is used to schedule a PDSCH or a PUCCH of the second terminal device. The second downlink control information may include at least one of the following: information about a DAI, information about a first HARQ process number, or a first reserved bit. The second downlink control information is used to schedule the PDSCH of the second terminal device. The second downlink control information includes the first reserved bit. For example, the 2 bits in the second downlink control information are not used for information indication, or the second terminal device does not read the 2 bits in the second downlink control information, as shown in Table 2. The second downlink control information includes the information about the DAI, that is, the second downlink control information includes 2 bits to indicate the information about the DAI. A field or bit occupied by the information about the DAI may be a reserved field or a reserved bit, as shown in Table 3.

**Table 2**

| Quantity of bits | Second downlink control information |
|---|---|
| 2 | First reserved bit |

**Table 3**

| Quantity of bits | Second downlink control information |
|---|---|
| 2 | Information about the DAI |

Optionally, when the first downlink control information is used to schedule the PDSCH or the PUCCH of the first terminal device, the first downlink control information may include at least one of the following: information about a DAI, information about a first HARQ process number, or a first reserved bit.

When the first downlink control information includes the information about the DAI or the first reserved bit, for example, a quantity of bits of the information about the DAI or the first reserved bit is X₁. X₁ is a positive integer. In the first downlink control information, 1 bit is used to indicate enabling of frequency hopping of the PUCCH or disabling of frequency hopping of the PUCCH, and 1 bit is the first reserved bit or the information about the DAI, as shown in Table 4.

**Table 4**

| Quantity of bits | First downlink control information |
|---|---|
| 2 | 1 bit is used to indicate a frequency hopping flag of the PUCCH |
| | 1 bit is the first reserved bit or 1 bit is the information about the DAI |

For example, the quantity of bits of the information that is about the DAI and that is included in the first downlink control information is X₁. Correspondingly, the network device may send the second downlink control information to the second terminal device, and the second downlink control information is used to schedule the PDSCH or the PUCCH of the second terminal device. The second downlink control information may include the information about the DAI. A quantity of bits of the information that is about the DAI and that is included in the second downlink control information is X₂. X₂ is a positive integer. A relationship between the quantity of bits of the information that is about the DAI and that is included in the first downlink control information and the quantity of bits of the information that is about the DAI and that is included in the second downlink control information is X₂>X₁. For example, as shown in Table 5, X₁=1, and X₂=2.

**Table 5**

| | First downlink control information | Second downlink control information |
|---|---|---|
| Quantity of bits of the information about the DAI | X₁=1 | X₂=2 |

For example, when the first downlink control information includes the first HARQ process number, a quantity of bits of the first HARQ process number may be Y₁. Y₁ is a positive integer. For example, the first downlink control information may further include the frequency hopping indication information of the PUCCH. For example, the size of the frequency hopping indication information of the PUCCH is 2 bits. In the first downlink control information, as shown in Table 6, 2 bits are used to indicate the frequency hopping indication information of the PUCCH, and 2 bits are used to indicate the first HARQ process number. Alternatively, 1 bit is used to indicate the frequency hopping indication information of the PUCCH, and 3 bits are used to indicate the first HARQ process number. Alternatively, 3 bits are used to indicate the frequency hopping indication information of the PUCCH, and 1 bit is used to indicate the first HARQ process number.

**Table 6**

| Quantity of bits | First downlink control information |
|---|---|
| 4 | 2 bits are used to indicate the frequency hopping indication information of the PUCCH |
| | 2 bits are used to indicate the first HARQ process number |

For example, the quantity of bits of the first HARQ process number included in the first downlink control information is Y₁. Correspondingly, the network device may send the second downlink control information to the second terminal device, and the second downlink control information is used to schedule the PDSCH or the PUCCH of the second terminal device. The second downlink control information may also include the first HARQ process number, and a quantity of bits of the first HARQ process number is Y₂. Y₂ is a positive integer. A relationship between the quantity of bits of the first HARQ process number included in the first downlink control information and the quantity of bits of the first HARQ process number included in the second downlink control information is Y₂>Y₁. For example, as shown in Table 7, Y₁=1, and Y₂=4. Alternatively, Y₁=2, or Y₂=3.

**Table 7**

| | First downlink control information | Second downlink control information |
|---|---|---|
| Quantity of bits of the first HARQ process number | Y₁=1 | Y₂=4 |

For example, a quantity of bits of the first reserved bit included in the first downlink control information is X₃. X₃ is a positive integer. Correspondingly, the network device may send the second downlink control information to the second terminal device, the second downlink control information may include the first reserved bit, and a quantity of bits of the first reserved bit is X₄. X₄ is a positive integer. A relationship between the quantity of bits of the first reserved bit included in the first downlink control information and the quantity of bits of the first reserved bit included in the second downlink control information is X₄>X₃. For example, as shown in Table 8, X₃=1, and X₄=2.

**Table 8**

| | First downlink control information | Second downlink control information |
|---|---|---|
| Quantity of bits of the first reserved bit | X₃=1 | X₄=2 |

Further, when the first downlink control information is used to schedule the PDSCH or the PUCCH of the first terminal device, the first downlink control information may be used to schedule a contention resolution message of the first terminal device, or may be used to schedule an acknowledgment feedback message of a contention resolution message of the first terminal device. Optionally, when the first downlink control information is used to schedule a PUSCH of the first terminal device, the first downlink control information may not include third information. The third information includes at least one of the following: a new data indicator, a second HARQ process number, or a second reserved bit. A size of the new data indicator or the second reserved bit is 1 bit, and a size of the second HARQ process number is 1, 2, or 3 bits.

In an implementation, a format of the first downlink control information may be a DCI format 0_0. Correspondingly, the network device may send the second downlink control information to the second terminal device, and the second downlink control information is used to schedule a PUSCH of the second terminal device. The second downlink control information may include at least one of the following: information about an NDI, information about a second HARQ process number, or a second reserved bit. When the second downlink control information includes the second reserved bit, that is, as shown in Table 9, the second downlink control information may include 4 bits as the second reserved bit. When the second downlink control information includes the information about the second HARQ process number, that is, as shown in Table 10, the second downlink control information includes 4 bits to indicate the second HARQ process number.

**Table 9**

| Quantity of bits | Second downlink control information |
|---|---|
| 4 | Second reserved bit |

**Table 10**

| Quantity of bits | Second downlink control information |
|---|---|
| 4 | Second HARQ process number |

Optionally, when the first downlink control information is used to schedule the PUSCH of the first terminal device, the first downlink control information may include at least one of the following: information about an NDI, information about a second HARQ process number, or a second reserved bit.

For example, as shown in Table 11, in the first downlink control information, 2 bits are used to indicate the frequency hopping indication information of the PUCCH, and 2 bits are used to indicate the second HARQ process number. Alternatively, in the first downlink control information, 1 bit is used to indicate the frequency hopping indication information of the PUCCH, and 3 bits are used to indicate the second HARQ process number. Alternatively, 3 bits are used to indicate the frequency hopping indication information of the PUCCH, and 1 bit is used to indicate the second HARQ process number.

**Table 11**

| Quantity of bits | First downlink control information |
|---|---|
| 4 | 2 bits are used to indicate the frequency hopping indication information of the PUCCH |
| | 2 bits are used to indicate the second HARQ process number |

For example, the first downlink control information includes the second HARQ process number, and a quantity of bits of the second HARQ process number is Y₃. Y₃ is a positive integer. Correspondingly, the network device may send the second downlink control information to the second terminal device, and the second downlink control information is used to schedule the PUSCH of the second terminal device. The second downlink control information may also include the second HARQ process number, and a quantity of bits of the second HARQ process number is Y₄. Y₄ is a positive integer. A relationship between the quantity of bits of the second HARQ process number included in the first downlink control information and the quantity of bits of the second HARQ process number included in the second downlink control information is Y₄>Y₃. For example, Y₃=1, and Y₄=4. Alternatively, as shown in Table 12, Y₃=2, and Y₄=3.

**Table 12**

| | First downlink control information | Second downlink control information |
|---|---|---|
| Quantity of bits of the second HARQ process number | Y₃=2 | Y₄=3 |

In the foregoing solution, the first downlink control information and the second downlink control information have a same DCI format, a same size (size), or a same information type during transmission. For example, the information type is a random access response message, a Msg3 message, a retransmitted message of Msg4, a Msg4 message, a feedback message of Msg4, or a PUCCH.

In another possible implementation, the first downlink control information is downlink control information scrambled by a first radio network temporary identifier, the first downlink control information includes at least one of frequency hopping indication information of a PUCCH, transmission mode indication information of the PUCCH, or first information, and the first information includes BWP indication information and/or repetition indication information.

Specifically, the terminal device may receive the first downlink control information that is scrambled by the first radio network temporary identifier and that is sent by the network device, to obtain at least one of the frequency hopping indication information of the PUCCH, the transmission mode indication information of the PUCCH, or the first information in the first downlink control information. The first information includes the BWP indication information and/or the repetition indication information of data. In addition, the first RNTI is one of a TC-RNTI, an RA-RNTI, an SI-RNTI, or a P-RNTI.

It should be understood that in the foregoing solution, the first downlink control information including the frequency hopping indication information of the PUCCH and/or the transmission mode indication information of the PUCCH and the first downlink control information including the first information may be scrambled by different first RNTIs. This is not limited in this application.

For descriptions of the frequency hopping indication information of the PUCCH or the transmission mode indication information of the PUCCH that is included in the first downlink control information, refer to the foregoing descriptions of the frequency hopping indication information of the PUCCH or the transmission mode indication information of the PUCCH in this step. For brevity, details are not described herein again in this application.

In addition, for example, the BWP indication information may indicate at least one of the following: an identifier of at least one BWP, a location of the BWP, a quantity of BWPs, identification information of the BWP, or a BWP switching manner. The identifier of the at least one BWP may include an identifier of an uplink BWP, an identifier of a downlink BWP, or identifiers of uplink and downlink BWPs.

The location information of the BWP includes at least one of the following: a sequence number of a start BWP resource, a sequence number of an end BWP resource, a quantity of included BWP resources, or a center frequency of the BWP. For example, the identification information of the BWP may indicate an uplink BWP or a downlink BWP.

It should be understood that a size of the BWP indication information may be 1 bit or 2 bits.

For example, the BWP indication information may be BWP indication information of Msg4 and/or BWP indication information of the PUCCH.

For example, the repetition indication information may indicate at least one of repetition quantity information or a transmission period. The transmission period is an occupied time domain length, and a unit of the time domain length may be any one of a slot, a symbol, or a subframe.

Optionally, when the first downlink control information is used to schedule a PDSCH, the first downlink control information may not include second information. The second information includes at least one of the following: information about a DAI, information about a first HARQ process number, or a first reserved bit.

For example, in the first downlink control information, there are a total of 2 bits for indicating the BWP indication information. That is, as shown in Table 13, the 2 bits are used to indicate the location information of the BWP.

**Table 13**

| Quantity of bits | First downlink control information |
|---|---|
| 2 | Location information of the BWP |

For example, in the first downlink control information, there are a total of 2 bits for indicating the BWP indication information. That is, as shown in Table 14, the 2 bits are used to indicate identification information of an uplink BWP.

**Table 14**

| Quantity of bits | First downlink control information |
|---|---|
| 2 | Identification information of the uplink BWP |

For example, in the first downlink control information, there are a total of 2 bits for indicating the repetition indication information. For example, the repetition indication information is repetition indication information of Msg4, and/or repetition indication information of the PUCCH. As shown in Table 15, 2 bits are used to indicate repetition quantity information of the PUCCH.

**Table 15**

| Quantity of bits | First downlink control information |
|---|---|
| 2 | Repetition quantity information of the PUCCH |

For example, the repetition quantity information is a value of a repetition quantity, or there is a correspondence between the repetition quantity information and the repetition quantity. For example, a bit state of the repetition quantity information is 00, and the repetition quantity is 1. For example, a bit state of the repetition quantity information is 01, and the repetition quantity is 2. For example, a bit state of the repetition quantity information is 10, and the repetition quantity is 4. For example, a bit state of the repetition quantity information is 11, and the repetition quantity is 8.

For example, the repetition quantity information of the PUCCH is a first parameter, and the first parameter may be a correspondence between a repetition quantity of the PUCCH and a repetition quantity of Msg3. For example, the correspondence is a multiple relationship or a proportional relationship. For example, Repetition quantity of the PUCCH = First parameter * Repetition quantity of Msg3, or Repetition quantity of the PUCCH = Repetition quantity of Msg3 / First parameter. For example, the first downlink control information may indicate one first parameter in candidate values of N first parameters. N is a positive integer. Optionally, the candidate value of the first parameter is preconfigured, or is configured in a system message, or is predefined, or is at least one of 0.25, 0.5, 1, 2, or 4. For example, when the repetition quantity of Msg3 is 4, and the first parameter is 0.5, the repetition quantity of the PUCCH is 4*0.5=2.

Optionally, when the first downlink control information is used to schedule the PDSCH or the PUCCH of the first terminal device, the first downlink control information may include at least one of the following: information about a DAI, information about a first HARQ process number, or a first reserved bit.

For example, in the first downlink control information, as shown in Table 16, 1 bit is used to indicate the BWP indication information, and 1 bit is the first reserved bit or the information about the DAI.

**Table 16**

| Quantity of bits | First downlink control information |
|---|---|
| 2 | 1 bit is used to indicate the BWP indication information |
| | 1 bit is the first reserved bit or 1 bit is the information about the DAI |

For example, in the first downlink control information, as shown in Table 17, 2 bits are used to indicate the location information of the BWP, and 2 bits are used to indicate the first HARQ process number. Alternatively, 1 bit is used to indicate the location information of the BWP, and 3 bits are used to indicate the first HARQ process number. Alternatively, 3 bits are used to indicate the location information of the BWP, and 1 bit is used to indicate the first HARQ process number.

**Table 17**

| Quantity of bits | First downlink control information |
|---|---|
| 4 | 2 bits are used to indicate the location information of the BWP |
| | 2 bits are used to indicate the first HARQ process number |

For a relationship between a bit of the first HARQ process number included in the first downlink control information and a bit of the first HARQ process number included in the second downlink control information, refer to Table 7. For a relationship between a bit of the information that is about the DAI and that is included in the first downlink control information and a bit of the information that is about the DAI and that is included in the second downlink control information, refer to Table 8. For brevity, details are not described herein again in this application.

Further, when the first downlink control information is used to schedule the PDSCH or the PUCCH of the first terminal device, the first downlink control information may be used to schedule a contention resolution message of the first terminal device, or may be used to schedule an acknowledgment feedback message of a contention resolution message of the first terminal device. Optionally, when the first downlink control information is used to schedule a PUSCH of the first terminal device, the first downlink control information may not include third information. The third information includes at least one of the following: a new data indicator, a second HARQ process number, or a second reserved bit. A size of the new data indicator or the second reserved bit is 1 bit, and a size of the second HARQ process number is 1, 2, or 3 bits.

For example, when the first downlink control information indicates the BWP indication information, 4 bits are used to indicate the BWP indication information. As shown in Table 18, 2 bits are used to indicate the location information of the BWP, and 2 bits are used to indicate the identification information of the BWP. Alternatively, 1 bit is used to indicate the location information of the BWP, and 3 bits are used to indicate the identification information of the BWP. Alternatively, 3 bits are used to indicate the location information of the BWP, and 1 bit is used to indicate the identification information of the BWP.

The BWP indication information may be information indicating a BWP for Msg3, or information indicating a BWP for retransmission of Msg3.

**Table 18**

| Quantity of bits | First downlink control information |
|---|---|
| 4 | 2 bits are used to indicate the location information of the BWP |
| | 2 bits are used to indicate the identification information of the BWP |

For example, in the first downlink control information, as shown in Table 19, 2 bits are used to indicate a repetition quantity of Msg3 transmission, and 2 bits are used to indicate a frequency hopping offset of the PUCCH. Alternatively, 1 bit is used to indicate the repetition quantity of Msg3 transmission, and 3 bits are used to indicate the frequency hopping offset of the PUCCH. Alternatively, 3 bits are used to indicate the repetition quantity of Msg3 transmission, and 1 bit is used to indicate the frequency hopping offset of the PUCCH.

**Table 19**

| Quantity of bits | First downlink control information |
|---|---|
| 4 | 2 bits are used to indicate the repetition quantity of Msg3 transmission |
| | 2 bits are used to indicate the frequency hopping offset of the PUCCH |

Correspondingly, the network device may send the second downlink control information to the second terminal device, and the second downlink control information is used to schedule a PUSCH of the second terminal device. For descriptions of at least one of the following: information about an NDI, information about a second HARQ process number, or a second reserved bit that is included in the second downlink control information, refer to related descriptions in Table 9 and Table 10. For brevity, details are not described herein again in this application.

Optionally, when the first downlink control information is used to schedule the PUSCH of the first terminal device, the first downlink control information may include at least one of the following: information about an NDI, information about a second HARQ process number, or a second reserved bit.

For example, when the first downlink control information indicates the repetition indication information, as shown in Table 20, 2 bits are used to indicate repetition quantity information of Msg3 transmission, and 2 bits are the second reserved bit. Alternatively, 1 bit is used to indicate the repetition quantity information of Msg3 transmission, and 3 bits are the second reserved bit. Alternatively, 3 bits are used to indicate the repetition quantity information of Msg3 transmission, and 1 bit is the second reserved bit.

**Table 20**

| Quantity of bits | First downlink control information |
|---|---|
| 4 | 2 bits are used to indicate the repetition quantity information of Msg3 transmission |
| | 2 bits are the reserved bit |

For example, in the first downlink control information, as shown in Table 21, 2 bits are used to indicate the location information of the BWP, and 2 bits are the second reserved bit. Alternatively, 1 bit is used to indicate the location information of the BWP, and 3 bits are the second reserved bit. Alternatively, 3 bits are used to indicate the location information of the BWP, and 1 bit is the second reserved bit.

**Table 21**

| Quantity of bits | First downlink control information |
|---|---|
| 4 | 2 bits are used to indicate the location information of the BWP |
| | 2 bits are the second reserved bit |

For example, in the first downlink control information, as shown in Table 22, 2 bits are used to indicate the location information of the BWP, and 2 bits are used to indicate the information about the second HARQ process number. Alternatively, 1 bit is used to indicate the location information of the BWP, and 3 bits are used to indicate the information about the second HARQ process number. Alternatively, 3 bits are used to indicate the location information of the BWP, and 1 bit is used to indicate the information about the second HARQ process number.

**Table 22**

| Quantity of bits | First downlink control information |
|---|---|
| 4 | 2 bits are used to indicate the location information of the BWP |
| | 2 bits are used to indicate the information about the second HARQ process number |

It should be understood that, for a relationship between a quantity of bits of the second HARQ process number included in the first downlink control information and a quantity of bits of the second HARQ process number included in the second downlink control information, refer to related descriptions in Table 12. For brevity, details are not described herein again in this application.

In the foregoing solution, the first downlink control information and the second downlink control information have a same DCI format, a same size (size), or a same information type during transmission. For example, the information type is a random access response message, a Msg3 message, a retransmitted message of Msg4, a Msg4 message, a feedback message of Msg4, or a PUCCH.

Optionally, before step S301, the network device may perform S300: Determine a first field in the first downlink control information based on a type of the first terminal device. The first field is used to indicate at least one of the frequency hopping indication information of the PUCCH, the transmission mode indication information of the PUCCH, or the first information.

S302: The first terminal device performs data transmission with the network device based on the first downlink control information.

For example, the first terminal device may perform data transmission with the network device based on the first downlink control information. When the first downlink control information schedules uplink data transmission, the data transmission is uplink data transmission. When the first downlink control information schedules downlink data transmission, the data transmission is downlink data transmission. Further, the data may be control information, data information, downlink control information, uplink control information, downlink data information, uplink data information, information for random access, paging information, or broadcast information.

Based on the foregoing solution, information about the first terminal device is indicated by using the reserved bit or a bit occupied by at least one of the DAI, the HARQ process number, or the NDI in the downlink control information, so that when the first terminal device and another type of terminal device (for example, the second terminal device) may select a same random access resource, same information from the network device may be received, thereby ensuring backward compatibility, and not affecting receiving of the another type of terminal device (for example, the second terminal device). Further, a payload size (payload size) of the downlink control information sent by the network device to the first terminal device is the same as that of the another type of terminal device (for example, the second terminal device). Therefore, it may be considered to use a field (a reserved field) in an existing DCI format to indicate the information about the first terminal device.

In addition, based on the foregoing solution, with at least one of the frequency hopping indication information of the PUCCH, the transmission mode indication information of the PUCCH, the BWP indication information, or the repetition indication information that is included in the first downlink control information, the first terminal device may perform frequency hopping to obtain a frequency diversity gain and improve flexibility, and/or transmission may be repeated to improve transmission performance, and/or a frequency resource may be adjusted to achieve load balancing or obtain a frequency diversity gain.

The foregoing mainly describes, from a perspective of interaction between network elements, the method provided in embodiments of this application. To implement functions in the method provided in the foregoing embodiments of this application, the network device and the terminal device may include a hardware structure and/or a software module, to implement the foregoing functions in a form of a hardware structure, a software module, or a combination of a hardware structure and a software module. Whether a function in the foregoing functions is performed by a hardware structure, a software module, or a combination of a hardware structure and a software module depends on particular applications and design constraints of the technical solutions.

FIG. 4 is a schematic diagram of a structure of a communications apparatus according to an embodiment of this application. The communications apparatus 400 may be the communications apparatus 30 in FIG. 1, or may be the terminal device in (a) in FIG. 2, (b) in FIG. 2, or (c) in FIG. 2, and is configured to implement the method for the terminal device in the foregoing method embodiment. Alternatively, the communications apparatus may be the first network device or the second network device in (a) in FIG. 2, or a network device in the RAN in (b) in FIG. 2 or (c) in FIG. 2, such as a CU, a DU, a CU-CP, or a CU-UP, and is configured to implement the method corresponding to the network device in the foregoing method embodiment. For specific functions, refer to the descriptions in the foregoing method embodiment.

The communications apparatus 400 includes one or more processors 401. The processor 401 may also be referred to as a processing unit, and may implement a specific control function. The processor 401 may be a general-purpose processor, a dedicated processor, or the like. For example, the processor includes a baseband processor, a central processing unit, an application processor, a modem processor, a graphics processing unit, an image signal processor, a digital signal processor, a video codec processor, a controller, a memory, and/or a neural-network processing unit. The baseband processor may be configured to process a communications protocol and communications data. The central processing unit may be configured to control the communications apparatus 400, execute a software program, and/or process data. Different processors may be independent components, or may be integrated into one or more processors, for example, integrated into one or more application-specific integrated circuits.

Optionally, the communications apparatus 400 includes one or more memories 402 to store instructions 404. The instructions may be run on the processor, to enable the communications apparatus 400 to perform the method described in the foregoing method embodiment. Optionally, the memory 402 may further store data. The processor and the memory may be separately disposed, or may be integrated together.

Optionally, the communications apparatus 400 may include instructions 403 (which sometimes may also be referred to as code or a program), and the instructions 403 may be run on the processor, to enable the communications apparatus 400 to perform the method described in the foregoing embodiment. The processor 401 may store data.

Optionally, the communications apparatus 400 may further include a transceiver 405 and an antenna 406. The transceiver 405 may be referred to as a transceiver unit, a transceiver, a transceiver circuit, a transceiver component, an input/output interface, or the like, and is configured to implement a transceiver function of the communications apparatus 400 by using the antenna 406.

Optionally, the communications apparatus 400 may further include one or more of the following components: a wireless communications module, an audio module, an external memory interface, an internal memory, a universal serial bus (universal serial bus, USB) port, a power management module, an antenna, a speaker, a microphone, an input/output module, a sensor module, a motor, a camera, a display, or the like. It may be understood that, in some embodiments, the UE 400 may include more or fewer components, or integrate some components, or split some components. These components may be implemented by hardware, software, or a combination of software and hardware.

The processor 401 and the transceiver 405 described in this application may be implemented on an integrated circuit (integrated circuit, IC), an analog IC, a radio frequency integrated circuit (radio frequency identification, RFID), a mixed-signal IC, an application-specific integrated circuit (application-specific integrated circuit, ASIC), a printed circuit board (printed circuit board, PCB), an electronic device, or the like. The communications apparatus described in this specification may be implemented by an independent device (for example, an independent integrated circuit or a mobile phone), or may be a part of a larger device (for example, a module that can be embedded into another device). For details, refer to the foregoing descriptions of the terminal device and the network device. Details are not described herein again.

An embodiment of this application provides a terminal device. The terminal device (referred to as UE for ease of description) may be used in the foregoing embodiments. The terminal device includes corresponding means (means), units, and/or circuits for implementing functions of the UE in FIG. 1, (a) in FIG. 2, (b) in FIG. 2, (c) in FIG. 2, or the embodiment shown in FIG. 3. For example, the terminal device includes a transceiver module to support the terminal device in implementing a transceiver function, and a processing module to support the terminal device in processing a signal.

FIG. 5 is a schematic diagram of a structure of a terminal device according to an embodiment of this application.

The terminal device 500 may be applied to the system shown in FIG. 1, (a) in FIG. 2, (b) in FIG. 2, or (c) in FIG. 2. For ease of description, FIG. 5 shows only main components of the terminal device 500. As shown in FIG. 5, the terminal device 500 includes a processor, a memory, a control circuit, an antenna, and an input/output apparatus. The processor is mainly configured to process a communications protocol and communications data, control the entire terminal device 500, execute a software program, and process data of the software program. The memory is mainly configured to store the software program and data. The control circuit is mainly configured to convert a baseband signal and a radio frequency signal and process the radio frequency signal. The antenna is mainly configured to receive and send radio frequency signals in an electromagnetic wave form. The input/output apparatus, for example, a touchscreen, a display, a microphone, or a keyboard, is mainly configured to receive data entered by a user and output data to the user.

For example, the terminal device 500 is a mobile phone. After the terminal device 500 is powered on, the processor may read a software program in a storage unit, explain and execute instructions of the software program, and process data of the software program. When data needs to be sent wirelessly, the processor performs baseband processing on the to-be-sent data, and then outputs a baseband signal to the control circuit. The control circuit performs radio frequency processing on the baseband signal, and then sends a radio frequency signal to outside in the electromagnetic wave form through the antenna. When data is sent to the terminal device 500, the control circuit receives a radio frequency signal through the antenna, converts the radio frequency signal into a baseband signal, and outputs the baseband signal to the processor, and the processor converts the baseband signal into data and processes the data.

A person skilled in the art may understand that, for ease of description, FIG. 5 shows only one memory and one processor. In some embodiments, the terminal device 500 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communications protocol and the communications data. The central processing unit is mainly configured to control the entire terminal device 500, execute the software program, and process the data of the software program. The processor in FIG. 5 integrates functions of the baseband processor and the central processing unit. A person skilled in the art may understand that the baseband processor and the central processing unit may be processors independent of each other, and are interconnected by using a technology such as a bus. The terminal device 500 may include a plurality of baseband processors to adapt to different network standards. The terminal device 500 may include a plurality of central processing units to enhance a processing capability of the terminal device 500. Components of the terminal device 500 may be connected by using various buses. The baseband processor may also be expressed as a baseband processing circuit or a baseband processing chip. The central processing unit may also be expressed as a central processing circuit or a central processing chip. The function of processing a communications protocol and communications data may be built in the processor, or may be stored in the storage unit in a form of a software program, and the processor executes the software program to implement a baseband processing function.

In an example, the antenna with a transceiver function and the control circuit may be considered as a transceiver unit 510 of the terminal device 500, and the processor with a processing function may be considered as a processing unit 520 of the terminal device 500. As shown in FIG. 5, the terminal device 500 includes a transceiver unit 510 and a processing unit 520. The transceiver unit may also be referred to as a transceiver, a transceiver device, a transceiver apparatus, or the like. Optionally, a component that is in the transceiver unit 510 and that is configured to implement a receiving function may be considered as a receiving unit, and a component that is in the transceiver unit 510 and that is configured to implement a sending function may be considered as a sending unit. That is, the transceiver unit 510 includes a receiving unit and a sending unit. For example, the receiving unit may also be referred to as a receiver, a receiving component, or a receiving circuit, and the sending unit may also be referred to as a transmitter, a transmitting component, or a transmitting circuit.

An embodiment of this application further provides a network device. The network device may be used in the foregoing embodiments. The network device includes means (means), units, and/or circuits for implementing functions of the network device in (a) in FIG. 2, (b) in FIG. 2, (c) in FIG. 2, or the embodiment shown in FIG. 3. For example, the network device includes a transceiver module to support the network device in implementing a transceiver function, and a processing module to support the network device in processing a signal.

FIG. 6 is a schematic diagram of a structure of a network device according to an embodiment of this application. As shown in FIG. 6, the network device 20 may be applied to the system shown in FIG. 1, (a) in FIG. 2, (b) in FIG. 2, or (c) in FIG. 2. The network device 20 is, for example, the access network device 20 shown in FIG. 1. The network device includes a baseband apparatus 201, a radio frequency apparatus 202, and an antenna 203. In an uplink direction, the radio frequency apparatus 202 receives, through the antenna 203, information sent by a terminal device, and sends, to the baseband apparatus 201 for processing, the information sent by the terminal device. In a downlink direction, the baseband apparatus 201 processes information of the terminal device and sends information to the radio frequency apparatus 202, and the radio frequency apparatus 202 processes the information of the terminal device and then sends information to the terminal device through the antenna 203.

The baseband apparatus 201 includes one or more processing units 2011, a storage unit 2012, and an interface 2013. The processing unit 2011 is configured to support the network device in performing functions of the network device in the foregoing method embodiment. The storage unit 2012 is configured to store a software program and/or data. The interface 2013 is configured to exchange information with the radio frequency apparatus 202. The interface includes an interface circuit, configured to input and output information. In an implementation, the processing unit is an integrated circuit, for example, one or more ASICs, one or more DSPs, one or more FPGAs, or a combination of these types of integrated circuits. These integrated circuits may be integrated to form a chip. The storage unit 2012 and the processing unit 2011 may be located in a same chip, that is, an on-chip storage element. Alternatively, the storage unit 2012 may be on a different chip from the processing element 2011, that is, an off-chip storage element. The storage unit 2012 may be one memory, or may be a collective name of a plurality of memories or storage elements.

The network device may implement some or all of the steps in the foregoing method embodiment in a form of scheduling programs by one or more processing units. For example, corresponding functions of the network device in FIG. 3 are implemented. The one or more processing units may support radio access technologies of a same standard, or may support radio access technologies of different standards.

A person of ordinary skill in the art may be aware that, units and steps of the examples described in combination with embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the apparatus embodiments described above are merely examples. For example, the unit division is merely logical function division. The units described as separate parts may or may not be physically separate, and parts shown as units may or may not be physical units, that is, may be located in one place, or may be distributed on a plurality of network elements. Some or all of the units may be selected based on actual requirements to achieve the objectives of the solutions of embodiments. When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The computer-readable storage medium may be any usable medium accessible to a computer. For example, the computer-readable medium may include but is not limited to a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk drive, another optical disk storage, a magnetic disk storage medium, another magnetic storage device, or any other medium that can carry or store expected program code in a form of instructions or a data structure and that can be accessed by a computer. In addition, by way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. An information transmission method, comprising:
receiving first downlink control information from a network device, wherein the first downlink control information comprises frequency hopping indication information of a physical uplink control channel PUCCH and/or transmission mode indication information of the PUCCH; and
performing data transmission based on the downlink control information.

2. The method according to claim 1, wherein the frequency hopping indication information of the PUCCH indicates:
at least one of the following: enabling of frequency hopping of the PUCCH, a frequency hopping offset of the PUCCH, or a frequency hopping manner of the PUCCH; or
disabling of frequency hopping of the PUCCH.

3. The method according to claim 2, wherein a size of the frequency hopping indication information of the PUCCH is 1 bit or 2 bits, and the enabling of frequency hopping of the PUCCH or the disabling of frequency hopping of the PUCCH is indicated by using 1 bit.

4. The method according to any one of claims 1 to 3, wherein the transmission mode indication information of the PUCCH indicates at least one piece of the following information:
a first-type non-frequency-hopping transmission mode of the PUCCH, a second-type non-frequency-hopping transmission mode of the PUCCH, a first-type frequency-hopping transmission mode of the PUCCH, or a second-type frequency-hopping transmission mode of the PUCCH.

5. The method according to any one of claims 1 to 4, wherein a size of the transmission mode indication information of the PUCCH is 1 bit or 2 bits.

6. The method according to any one of claims 1 to 5, wherein the first downlink control information is used to schedule a physical downlink shared channel PDSCH or the PUCCH, the first downlink control information does not comprise second information, and the second information comprises at least one of the following: information about a downlink assignment index, information about a first hybrid automatic repeat request HARQ process number, or a first reserved bit.

7. The method according to any one of claims 1 to 5, wherein the first downlink control information is used to schedule a PDSCH or the PUCCH, and the first downlink control information comprises 1-bit information about a downlink assignment index; and/or
the first downlink control information comprises information about a first HARQ process number whose size is 1, 2, or 3 bits.

8. The method according to claim 6 or 7, wherein
the first downlink control information is used to schedule a contention resolution message of the terminal device; or
the first downlink control information is used to schedule an acknowledgment feedback message of a contention resolution message of the terminal device.

9. The method according to any one of claims 1 to 5, wherein the first downlink control information is used to schedule a physical uplink shared channel PUSCH, the first downlink control information does not comprise third information, and the third information comprises at least one of the following: a new data indicator, a second HARQ process number, or a second reserved bit.

10. The method according to claim 9, wherein
a size of the new data indicator comprised in the third information is 1 bit; and/or
a size of the second HARQ process number comprised in the third information is 1, 2, or 3 bits.

11. An information transmission method, comprising:
receiving first downlink control information from a network device, wherein the first downlink control information is downlink control information scrambled by a first radio network temporary identifier RNTI, the first downlink control information comprises at least one of frequency hopping indication information of a physical uplink control channel PUCCH, transmission mode indication information of the PUCCH, or first information, and the first information comprises bandwidth part BWP indication information and/or repetition indication information; and
performing data transmission based on the downlink control information.

12. The method according to claim 11, wherein the BWP indication information indicates at least one of the following:
an identifier of at least one BWP, a location of the BWP, a quantity of BWPs, identification information of the BWP, or a BWP switching manner.

13. The method according to claim 11 or 12, wherein the frequency hopping indication information of the PUCCH indicates:
at least one of the following: enabling of frequency hopping of the PUCCH, a frequency hopping offset of the PUCCH, or a frequency hopping manner of the PUCCH; or
disabling of frequency hopping of the PUCCH.

14. The method according to claim 13, wherein a size of the frequency hopping indication information of the PUCCH is 1 bit or 2 bits, and the enabling of frequency hopping of the PUCCH or the disabling of frequency hopping of the PUCCH is indicated by using 1 bit.

15. The method according to any one of claims 11 to 14, wherein the transmission mode indication information of the PUCCH indicates at least one piece of the following information:
a first-type non-frequency-hopping transmission mode of the PUCCH, a second-type non-frequency-hopping transmission mode of the PUCCH, a first-type frequency-hopping transmission mode of the PUCCH, or a second-type frequency-hopping transmission mode of the PUCCH.

16. The method according to any one of claims 11 to 15, wherein a size of the transmission mode indication information of the PUCCH is 1 bit or 2 bits.

17. The method according to any one of claims 11 to 16, wherein the first downlink control information is used to schedule a physical downlink shared channel PDSCH or the PUCCH, the first downlink control information does not comprise second information, and the second information comprises at least one of the following: information about a downlink assignment index, information about a first hybrid automatic repeat request HARQ process number, or a first reserved bit.

18. The method according to any one of claims 11 to 16, wherein the first downlink control information is used to schedule a PDSCH or the PUCCH, and the first downlink control information comprises 1-bit information about a downlink assignment index; and/or
the first downlink control information comprises information about a first HARQ process number whose size is 1, 2, or 3 bits.

19. The method according to claim 17 or 18, wherein
the first downlink control information is used to schedule a contention resolution message of the terminal device; or
the first downlink control information is used to schedule an acknowledgment feedback message of a contention resolution message of the terminal device.

20. The method according to any one of claims 1 to 16, wherein the first downlink control information is used to schedule a physical uplink shared channel PUSCH, the first downlink control information does not comprise third information, and the third information comprises at least one of the following: a new data indicator, a second HARQ process number, or a second reserved bit.

21. The method according to claim 20, wherein
a size of the new data indicator comprised in the third information is 1 bit; and/or
a size of the second HARQ process number comprised in the third information is 1, 2, or 3 bits.

22. An information transmission method, comprising:
sending first downlink control information to a terminal device, wherein the first downlink control information comprises frequency hopping indication information of a physical uplink control channel PUCCH and/or transmission mode indication information of the PUCCH; and
performing data transmission based on the downlink control information.

23. The method according to claim 22, wherein the method further comprises:
determining a first field in the first downlink control information based on a type of the terminal device, wherein the first field is used to indicate at least one of the frequency hopping indication information of the PUCCH, the transmission mode indication information of the PUCCH, or the first information.

24. The method according to claim 23, wherein the frequency hopping indication information of the PUCCH indicates:
at least one of the following: enabling of frequency hopping of the PUCCH, a frequency hopping offset of the PUCCH, or a frequency hopping manner of the PUCCH; or
disabling of frequency hopping of the PUCCH.

25. The method according to claim 24, wherein a size of the frequency hopping indication information of the PUCCH is 1 bit or 2 bits, and the enabling of frequency hopping of the PUCCH or the disabling of frequency hopping of the PUCCH is indicated by using 1 bit.

26. The method according to any one of claims 22 to 25, wherein the transmission mode indication information of the PUCCH indicates at least one piece of the following information:
a first-type non-frequency-hopping transmission mode of the PUCCH, a second-type non-frequency-hopping transmission mode of the PUCCH, a first-type frequency-hopping transmission mode of the PUCCH, or a second-type frequency-hopping transmission mode of the PUCCH.

27. The method according to any one of claims 22 to 26, wherein a size of the transmission mode indication information of the PUCCH is 1 bit or 2 bits.

28. The method according to any one of claims 22 to 27, wherein the first downlink control information is used to schedule a PDSCH or the PUCCH, the first downlink control information does not comprise second information, and the second information comprises at least one of the following: information about a downlink assignment index, information about a first hybrid automatic repeat request HARQ process number, or a first reserved bit.

29. The method according to any one of claims 22 to 27, wherein the first downlink control information is used to schedule a PDSCH or the PUCCH, and the first downlink control information comprises 1-bit information about a downlink assignment index; and/or
the first downlink control information comprises information about a first HARQ process number whose size is 1, 2, or 3 bits.

30. The method according to claim 28 or 29, wherein
the downlink control information is used to schedule a contention resolution message of the terminal device; or
the downlink control information is used to schedule an acknowledgment feedback message of a contention resolution message of the terminal device.

31. The method according to any one of claims 22 to 27, wherein the first downlink control information is used to schedule a PUSCH, the first downlink control information does not comprise third information, and the third information comprises at least one of the following: a new data indicator, a second HARQ process number, or a second reserved bit.

32. The method according to claim 31, wherein
a size of the new data indicator comprised in the third information is 1 bit; and/or
a size of the second HARQ process number comprised in the third information is 1, 2, or 3 bits.

33. An information transmission method, comprising:
sending first downlink control information to a terminal device, wherein the first downlink control information is scrambled by a first radio network temporary identifier RNTI, the first downlink control information comprises at least one of frequency hopping indication information of a PUCCH, transmission mode indication information of the PUCCH, or first information, and the first information comprises BWP indication information and/or repetition indication information; and
performing data transmission based on the downlink control information.

34. The method according to claim 33, wherein the BWP indication information indicates at least one of the following:
an identifier of at least one BWP, a location of the BWP, a quantity of BWPs, identification information of the BWP, or a BWP switching manner.

35. The method according to claim 33 or 34, wherein the method further comprises:
determining a first field in the first downlink control information based on a type of the terminal device, wherein the first field is used to indicate at least one of the frequency hopping indication information of the PUCCH, the transmission mode indication information of the PUCCH, or the first information.

36. The method according to any one of claims 33 to 35, wherein the frequency hopping indication information of the PUCCH indicates:
at least one of the following: enabling of frequency hopping of the PUCCH, a frequency hopping offset of the PUCCH, or a frequency hopping manner of the PUCCH; or
disabling of frequency hopping of the PUCCH.

37. The method according to claim 36, wherein a size of the frequency hopping indication information of the PUCCH is 1 bit or 2 bits, and the enabling of frequency hopping of the PUCCH or the disabling of frequency hopping of the PUCCH is indicated by using 1 bit.

38. The method according to any one of claims 33 to 37, wherein the transmission mode indication information of the PUCCH indicates at least one piece of the following information:
a first-type non-frequency-hopping transmission mode of the PUCCH, a second-type non-frequency-hopping transmission mode of the PUCCH, a first-type frequency-hopping transmission mode of the PUCCH, or a second-type frequency-hopping transmission mode of the PUCCH.

39. The method according to any one of claims 33 to 38, wherein a size of the transmission mode indication information of the PUCCH is 1 bit or 2 bits.

40. The method according to any one of claims 33 to 39, wherein the first downlink control information is used to schedule a PDSCH or the PUCCH, the first downlink control information does not comprise second information, and the second information comprises at least one of the following: information about a downlink assignment index, information about a first hybrid automatic repeat request HARQ process number, or a first reserved bit.

41. The method according to any one of claims 33 to 39, wherein the first downlink control information is used to schedule a PDSCH or the PUCCH, and the first downlink control information comprises 1-bit information about a downlink assignment index; and/or
the first downlink control information comprises information about a first HARQ process number whose size is 1, 2, or 3 bits.

42. The method according to claim 40 or 41, wherein
the downlink control information is used to schedule a contention resolution message of the terminal device; or
the downlink control information is used to schedule an acknowledgment feedback message of a contention resolution message of the terminal device.

43. The method according to any one of claims 33 to 39, wherein the first downlink control information is used to schedule a PUSCH, the first downlink control information does not comprise third information, and the third information comprises at least one of the following: a new data indicator, a second HARQ process number, or a second reserved bit.

44. The method according to claim 43, wherein
a size of the new data indicator comprised in the third information is 1 bit; and/or
a size of the second HARQ process number comprised in the third information is 1, 2, or 3 bits.

45. A communications apparatus, comprising a module configured to perform the method according to any one of claims 1 to 44.

46. A communications apparatus, comprising a processor and a communications interface, wherein the communications interface is configured to: receive a signal from another communications apparatus other than the communications apparatus and transmit the signal to the processor, or send a signal from the processor to another communications apparatus other than the communications apparatus; and the processor is configured to implement the method according to any one of claims 1 to 44 by using a logic circuit or executable code instructions.

47. A computer-readable storage medium, wherein the computer-readable storage medium stores a computer program, and when the computer program is run, the method according to any one of claims 1 to 44 is implemented.

48. A computer program product, wherein the computer program product comprises computer program code, and when the computer program code is run, the method according to any one of claims 1 to 44 is implemented.
